# EUROPÄISCHE PATENTSCHRIFT

(11) **EP 0 974 610 B1**
(45) Veröffentlichungstag und Bekanntmachung des Hinweises auf die Patenterteilung: **10.03.2004**
(21) Anmeldenummer: 99810628.0
(22) Anmeldetag: 13.07.1999
(51) Int. Cl.: C08G 59/40, C08G 59/68, C08K 3/10, C08K 3/20

(54) **Härtbare Epoxidmasse und deren Verwendung**
Curable epoxy compound and its use
Composé d'époxy et son utilisation

(30) Priorität: 21.07.1998 DE 19832669
(43) Veröffentlichungstag der Anmeldung: 26.01.2000
(73) Patentinhaber: HILTI Aktiengesellschaft, 9494 Schaan (LI)
(72) Erfinder: Dierker, Sascha, 86399 Bobingen (DE); Pfeil, Armin, 86916 Kaufering (DE)
(74) Vertreter: Wildi, Roland

(56) Entgegenhaltungen:
- EP-A- 0 454 271
- DE-A- 3 617 702
- GB-A- 1 036 574
- DATABASE WPI Section Ch, Week 199810 Derwent Publications Ltd., London, GB; Class A21, AN 1998-109267 XP002126143 & TW 319 788 A (NAT SCI COUNCIL), 11. November 1997 (1997-11-11)

## Beschreibung

Es ist bekannt, dass kalthärtende Epoxidharze namentlich bei Temperaturen unterhalb Raumtemperatur verhältnismässig langsam aushärten. Neben hochreaktiven Aminhärtern wurde schon versucht, die Reaktivität des Systems durch entsprechend hohe Katalysatormengen wie beispielsweise durch die Verwendung von allerdings giftigen Verbindungen wie Phenolen, Mehrkaptanen und dergleichen zu erhöhen. Die üblicherweise eingesetzten Reaktiwerdünner zur Verringerung der hohen Viskosität der Epoxidflüssigharze haben regelmässig wenig Einfluss auf die Härtungsgeschwindigkeit, führen andererseits oft zu Verschlechterungen der mechanischen Eigenschaften des gehärteten Harzes, namentlich bei Verwendung in Mengen von 25 % und mehr.

Aus des US-PS 5 021 537 ist es bekannt, dass mit bestimmten Reaktiwerdünnem, nämlich mit Acetoacetaten selbst in geringeren Mengen die Härtung von Epoxidharzen beschleunigt werden kann. Aufgabe der vorliegenden Erfindung ist die Verbesserung dieser bekannten Epoxidmassen, insbesondere im Sinne einer Erhöhung der Härtungsgeschwindigkeit, einer Verbesserung des Fliessverhaltens, der Durchhärtung, dies vor allem auch im niederen Temperaturbereich unter 0° C. Weitere Aufgaben ergeben sich aus den geltend gemachten Vorteilen. Die Lösung dieser Aufgaben gelingt durch härtbare Epoxidmassen enthaltend (a) Polyepoxid, (b) Polyamin, (c) Polyacetoacetat, (d) Erdalkalioxide, vorzugweise Calciumoxid und/oder Magnesium Oxid. Erdallkations, und gegebenenfalls weitere Bestandteile wie Füllmittel, Verdünner, Härtungskatalysatoren, Rheologiehilfsmittel, Netzmittel, Farbstoffe und dergleichen.

Die Polyepoxide können gesättigt, ungesättigt, aliphatisch, cycloaliphatisch, aromatisch oder heterocyclisch sein und gegebenenfalls durch Substituenten, die keinen störenden Einfluss auf die Härtungsreaktion haben wie beispielsweise Chlor, Brom, Alkyl oder Arylreste substituiert sein. Insbesondere sind Polyglycidylether von mehrwertigen Alkoholen und Phenolen, wie von Alkylenglykolen z.B. Ethylenglykol, Glycerin, insbesondere aber Polyglycidylether von mehrwertigen Phenolen, namentlich von Bisphenol A, Bisphenol F und/oder Novolak bevorzugt. Die Epoxidäquivalentgewichte derartiger Verbindungen liegen vorzugsweise im Bereich von etwa 150 - 2000, vorzugsweise von ungefähr 170 - 400. Geeignete Polyepoxidverbindungen sind z.B. in Lee, Neville, Handbook of Epoxy Resins 1967, beschrieben.

Als Härter haben sich insbesondere aliphatische, cycloaliphatische und/oder aromatische Amine und Polyamine z.B. Alkylendiamine wie Ethylendiamin, Propylendiamin, Hexamethylendiamin bewährt. Bevorzugt sind die durch Kondensation von Polyaminen, wie Polyalkylenpolyaminen, mit Aldehyden wie Formaldehyd und ein- oder mehrwertigen Phenolen erhältlichen hochreaktiven Mannichbasen, insbesondere die, ohne Restgehalte an Phenolen, nicht toxischen Kondensationsprodukte. Als Polyacetatoacetatverbindung werden bevorzugt Verbindungen mit 2 - 5 Acetoacetatgruppen, insbesondere Bisacetoacetate von zweiwertigen aliphatischen Alkoholen wie Ethylenglykol aber auch Triacetoacetate beispielsweise von dreiwertigen aliphatischen Alkoholen wie Glycerin und Tetraacetoacetate mehrwertiger Alkohole verwendet. Bevorzugt sind Triacetoacetate von Trimethylolalkanen wie Trimethylolpropan oder Trimethyloläthan.

Die Erdalkali Metallverbindungen liegen in Form ihrer Oxide vor, insbesondere in einer die Metallionen leicht freisetzenden z.B. feinteiligen Form vor. Calciumoxid und Magnesiumoxid haben sich als besonders geeignet erwiesen.

Brauchbare Füllmittel, wenn enthalten, sind z.B. Quarz, Silikate, Alusilikate, Korund, Keramik, Glas, Carbonate wie Kreide, Kaolin, organische oder anorganische Fasern und dergleichen. Die erfindungsgemässen Epoxidmassen können weitere z.B. übliche Bestandteile enthalten wie inerte organische Lösungsmittel z.B. Alkohole, Ester, insbesondere Glykoläther oder Glykolester und dergleichen, Härtungskatalysatoren wie Triethylamin, Rheologiehilfsmittel, Netzmittel usw.

Auf 100 Gew.-Teile aus Epoxid und Acetoacetat können in der Grössenordnung von z.B. 20 - 80, vorzugsweise 25 - 50 Gew.-Teile Polyamin enthalten sein. Die Aminmenge sollte, soweit es das Epoxid selbst angeht, ausreichen, um 0.8 - 3 Aminwasserstoff je Epoxidgruppe zur Verfügung zu stellen. Ein gewisser Aminverbrauch der Acetoacetate ist nicht ausgeschlossen. Bevorzugt ist ein Aminüberschuss z.B. über den Aminwasserstoffbedarf, der stöchiometrisch zur Epoxidhärtung erforderlich ist und über den Bedarf an einer Aminogruppe pro Acetoacetatgruppe hinausgeht. Die Polyacetoacetate sind meist in einer Menge bis zu 35 Gew.-%, bezogen auf das Gesamtgewicht aus Epoxid und Polyacetoacetat enthalten, wobei höhere Mengen nicht ausgeschlossen sind. Bevorzugt sind Gehalte zwischen 2 und 25 Gew.-% Polyacetoacetat, bezogen auf das Gesamtgewicht aus Epoxid und Polyacetoacetat. Ein Teil des Polyacetoacetats kann durch untergeordnete Mengen anderer Reaktiwerdünner wie C₁₀-C₁₈-Glycidyläther, tert. Butylphenylglycidyläther und dergleichen ersetzt sein. Die Konzentration des kationischen Metalls kann z.B. stöchiometrisch definiert werden. So können z.B. 0,20 Mol Metallverbindung oder mehr pro Acetoacetat-Äquivalent enthalten sein, bevorzugt etwa 0,25 - 1 Mol Metallverbindung pro Acetoacetatgruppe, ohne dass höhere oder niedrigere Mengen z.B. 0,1 Mol ausgeschlossen sind.

Die erfindungsgemässen Polyepoxidmassen können als Zweikomponentensysteme, in denen Epoxidharz und Härter voneinander getrennt sind, konfektioniert werden. Dabei enthält die eine Komponente regelmässig das Polyepoxid und die Polyacetoacetatverbindung, während die andere Komponente den Härter, gegebenenfalls Härtungskatalysator und die Metallverbindung enthält. Das Füllmittel kann in der einen oder anderen, gegebenenfalls auch in beiden Komponenten verteilt sein, ebenso wie weitere andere an sich bekannte Bestandteile.

Die erfindungsgemässen Massen zeigen eine für Epoxidharze atypisch niedrige Viskosität, deutlich beschleunigte Anfangsaushärtung, gute Aus- und Durchhärtung, gutes Fliessverhalten, hohe Reaktionsgeschwindigkeit, alles insbesondere auch bei niedrigen Temperaturen, wie -5° oder niedriger, sehr gute Haftung und geringe Schrumpfung. Bemerkenswert ist die Reaktivität gegenüber mineralischen Bohrlochwandungen, offenbar eine durch Metallverbindung, wie Calcium-lonen bedingte Reaktion, welche die Anwesenheit der Kationen in den erfindungsgemässen Massen unter solchen Bedingungen unter Umständen zum Teil ersetzen könnte. Die erfindungsgemässen Massen eignen sich sehr gut zur Verwendung im Bauwesen ganz allgemein, z.B. für Befestigungen, Verankerungen, Riss-Sanierung, Verklebungen und dergleichen.

Die erfindungsgemässen Epoxidmassen haben sich insbesondere zur Befestigung von Verankerungsmitteln in Bohrlöchern, sowohl in natürlichem als auch in künstlichem Gestein, bewährt. Sie erreichen gegenüber vergleichbaren Epoxidmassen schon bald 80% der Endfestigkeit.

Das nachfolgende Beispiel dient der Erläuterung der Erfindung:

| | |
|---|---|
| Basis Bisphenol A/F - Epoxid-Flüssigharz mit einem Epoxidäquivalentgewicht von 183 g/val (EP 116 der Firma Hoechst) | 37,1 % |
| AATMP Trimethylolpropan-trisacetoacetat | 12,2 % |
| Mannichbase mit einem Aminwasserstoffäquivalent von ca 75 g/val (VEH 2626 der Hirma Hoechst) | 13,2 % |
| Füllstoff 1: Quarzsand mit einer mittleren Korngrösse von 0,24 mm | 11,0 % |
| Füllstoff 2; Quarzmehl mit einer spezifischen Oberfläche von 0,9 m²/g nach BET | 21,7 % |
| Erdalkalioxid: CaO (98%ig) mit einer spezifischen Oberfläche von 5-10 m²/g nach BET | |
| pyrogene Kieselsäure | 2,0 % |

Vergleichsversuch einer als Glaspatronen-Verbundanker mit und ohne einer Metallverbindung enthaltender Acetoacetat-Epoxidmasse:

### 1. Materialien

### Harzkomponente:

Mischung aus 75 Gew.-Teilen Beckopox EP 116 (flüssiges Epoxidharz mit Epoxidäquivalentgewicht 185 auf der Basis von Bisphenol A/F) und 25 Gew.-Teilen Trimethylolpropan-Trisacetoacetat.

### Härter:

Beckopox Spezialhärter VEH 2626 (styrolfreie Mannichbase mit einem Aminwasserstoff-Äquivalentgewicht von 73 mg KOH/g), welcher 1 Gew.-% Triethylamin enthält.

### Aussenröhrchen:

Länge 100 mm, Durchmesser 12,7 mm

### Innenröhrchen:

Länge 100 mm, Durchmesser 9,25 mm

### 2. Herstellung der Verbundpatrone

### Ohne Metallkation-Verbindung:

In das Innenröhrchen werden 6,0 g Quarzsand und 1,8 g Härter eingebracht. In das Aussenröhrchen füllt man 4,2 g der Harzmischung und gibt das Innenröhrchen dazu.

### Mit Metallkation-Verbindung (CaO):

In das Innenröhrchen werden 5,7 g Quarzsand, 0,4 g CaO und 1,9 g Härter eingebracht. In das Aussenröhrchen füllt man 4,2 g der Harzmischung und gibt das Innenröhrchen dazu.

### 3. Setzversuch

Die Verbundpatronen werden in Bohrlöcher des Durchmessers 14 mm in hochfesten Beton eingebracht. Dann wird eine 12mm-Ankerstange mit Dachschneide schlagdrehend in das Bohrloch eingesetzt. Durch den Setzvorgang werden die Glasröhrchen zerstört und die Komponenten mischen sich, wobei das zermahlene Glas als Füllstoff in die Reaktionsharz-Masse eingearbeitet wird. In verschiedenen Zeitabständen werden Anker mit einer kraftmessenden Auszugsvorrichtung ausgezogen und der Aushärteverlauf über die Versagenslast bestimmt.

### 4. Auswertung und Interpretation

| **Zeit - Aushärtedauer** | **Versagenslast in kN ohne CaO** | **Versagenslast in kN mit CaO** |
|---|---|---|
| 1 Stunde | 4,8 | 7,7 |
| 2 Stunden | 58,9 | 82,6 |
| 6 Sunden | 97,0 | 95,6 |
| 24 Stunden | 101,7 | 101,4 |

Man erkennt deutlich, dass das Metallkation die Aushärtung schon nach 1 Stunde, insbesondere nach 2 Stunden, erheblich beschleunigt. Schon nach 2 Stunden lassen sich diese Anker belasten, während dies bei den Ankern ohne Metallkation erheblich später der Fall ist. Die Anwesenheit des Metallkations hat keinen schädlichen Einfluss auf die Endleistung des Systems.

## Patentansprüche

1. Härtbare Epoxidmasse enthaltend:
(a) Polyepoxid
(b) Polyamin
(c) Polyacetoacetat
(d) eine Metallverbindung und gegebenenfalls weitere Bestandteile wie Füllmittel, Verdünner, Härtungskatalysatoren, Rheologiehilfsmittel, Netzmittel, Farbstoffe und dergleichen, **dadurch gekennzeichnet, daß** sie als Metallverbindung Erdalkalioxide, vorzugsweise Calciumoxid und/oder Magnesiumoxid enthält.

2. Epoxidmasse gemäß Anspruch 1, **dadurch gekennzeichnet, daß** als Polyepoxid Polyglycidylether mehrwertiger Phenole enthalten sind.

3. Epoxidmasse gemäß Anspruch 1 oder 2, **dadurch gekennzeichnet, daß** als Polyepoxid Polyglycidylether, insbesondere Diglycidylether von Bisphenol A, Bisphenol F und/oder Novolak enthalten sind.

4. Epoxidmasse gemäß einem der vorhergehenden Ansprüche, **gekennzeichnet durch** einen Gehalt an Bis-, Tri- und/oder Tetraacetoacetatverbindung, insbesondere Trimethylolpropan-trisacetoacetat und/oder Trimethylolethan-trisacetoacetat.

5. Verwendung der härtbaren Epoxidmasse gemäß einem der vorhergehenden Patentansprüche im Bauwesen, insbesondere zur Befestigung von Verankerungselementen wie Ankerstangen und Dübeln in Bohrlöchern.

## Claims

1. Curable epoxide substance, containing
(a) polyepoxide
(b) polyamine
(c) polyacetoacetate
(d) a metal compound and, if required, additional components such as fillers, thinners, curing catalysts, rheologic auxiliary means, netting means, colourings and the like, **characterised in that** it contains as metal compound earth alkalioxide, preferably calcium oxide and/or magnesium oxide.

2. Epoxide substance according to Claim 1, **characterised in that** it contains as polyepoxide polyglydidylether of multi-value phenols.

3. Epoxide substance according to Claim 1 or 2, **characterised in that** as polyepoxide are contained polyglycidylether, in particular diglycidylether of bisphenol A, bisphenol F and/or novolak.

4. Epoxide substance according to one of the above claims, **characterised by** a content of bis-, tri- and/or tetraacetoacetate compound, in particular trimethylolproprane-trisacetoacetate and/or trimethylolethan-trisacetoacetate.

5. Use of the curable epoxide substance according to one of the above patent claims in building work, in particular for fixing anchoring elements such as anchor bars and dowels in boreholes.

## Revendications

1. Mélange époxy durcissable contenant :
(a) polyépoxyde
(b) polyamine
(c) polyacétoacétate
(d) un composé métallique et éventuellement d'autres constituants tels que matières de charge, diluants, catalyseurs de durcissement, additifs rhéologiques, agents mouillants, colorants et analogues, **caractérisé en ce qu'**il contient, comme composé métallique, des oxydes alcalinoterreux, de préférence de l'oxyde de calcium et/ou de l'oxyde de magnésium.

2. Mélange époxy selon la revendication 1, **caractérisé en ce qu'**il contient, comme polyépoxyde, des polyglycidyléthers de phénols polyvalents.

3. Mélange époxy selon la revendication 1 ou 2, **caractérisé en ce qu'**il contient, comme polyépoxyde, des polyglycidyléthers, en particulier des diglycidyléthers de bisphénol A, bisphénol F et/ou novolaque.

4. Mélange époxy selon une des revendications précédentes, **caractérisée par** une teneur en composé de bis-, tri- et/ou tétraacétoacétate, en particulier de triméthylolpropane triacétoacétate et/ou de triméthyloléthane triacétoacétate.

5. Utilisation du mélange époxy durcissable selon une des revendications précédentes dans le secteur du bâtiment, en particulier pour la fixation d'éléments d'ancrage tels que tiges d'ancrage et chevilles dans des trous forés.
